# EUROPEAN PATENT SPECIFICATION

(11) **EP 3 514 946 B1**
(45) Date of publication and mention of the grant of the patent: **13.12.2023**
(21) Application number: 19152006.3
(22) Date of filing: 16.01.2019
(51) Int. Cl.: H04L 67/125, H02P 23/14

(54) **METHOD FOR CONFIGURATION OF ELECTRIC DRIVE APPARATUS**
VERFAHREN ZUR KONFIGURATION EINER ELEKTRISCHEN ANTRIEBSVORRICHTUNG
PROCÉDÉ DE CONFIGURATION D'APPAREIL À COMMANDE ÉLECTRIQUE

(30) Priority: 22.01.2018 US 201815876991
(43) Date of publication of application: 24.07.2019
(73) Proprietor: ABB Schweiz AG, 5400 Baden (CH)
(72) Inventor: Hu, Zhongliang, 00380 Helsinki (FI); Tamminiemi, Petri, 00380 Helsinki (FI)
(74) Representative: Kolster Oy Ab

(56) References cited:
- EP-A1- 3 220 608
- EP-A1- 3 220 609
- US-A1- 2004 227 523

## Description

### FIELD OF THE DISCLOSURE

The disclosure relates to electric drive apparatuses used in different industries for different applications more particularly to a method for configuration of an electric drive apparatus.

### BACKGROUND OF THE DISCLOSURE

Electric drives are used in industry for different applications, such as for driving motors within the transportation industry, for driving different devices within the process and manufacturing industry as well as within the energy industry. There are applications commonly used for electric drives within the transportation industry for example in metro and railway traffic applications as well as in ship propulsion unit applications of the marine industry. Within the process and manufacturing industry, electric drives can be used for example in conveyer applications, in mixer applications or even in paper machine applications. Within the energy industry, electric drives can be used for example as electric drives for wind turbines of the wind power industry and as electric drives of the solar power industry.

Electric drives for electric motors may be divided into DC motor drives (DC, direct current) and AC drives (AC, alternating current). In a DC motor of a DC motor drive, a magnetic field is generated by the current through the field winding in the stator. This magnetic field is always maintained at right angles to the field generated by the armature winding. In this way, a DC motor's torque is generated, which torque can then be easily controlled in a DC motor drive by changing the armature current and keeping the magnetizing current constant. In a DC motor drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor can be controlled, whereas in frequency controlled AC drives the load dictates the torque level.

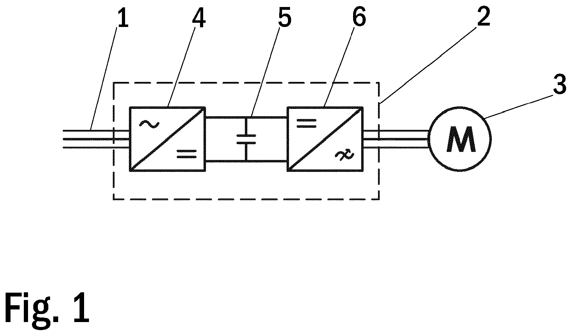

In the following, prior art will be described with reference to the accompanying Figure 1, which shows a block diagram of an electric drive according to prior art.

Figure 1 shows a block diagram of an electric drive according to prior art. The electric drive according to prior art comprises an input power feed 1, a frequency controller 2 and a load 3. The load 3 can be for example a motor 3. The frequency controller 2 typically comprises a rectifier unit 4, a fixed DC voltage intermediate circuit 5 and an inverter unit 6. The rectifier unit 4 of the frequency controller 2 converts the AC input power coming from the input power feed 1 into DC intermediate power. The rectifying in the frequency controller 2 can be realised for example with a 6-pulse diode bridge. The DC intermediate power coming from the rectifier unit 4 of the frequency controller 2 is stored in the fixed DC voltage intermediate circuit 5 acting as intermediate energy storage. The fixed DC voltage intermediate circuit 5 of the frequency controller 2 can be realised for example with capacitors. The inverter unit 6 of the frequency controller 2 converts the DC power of the fixed DC voltage intermediate circuit 5 into three channels of AC energy at the frequency suited by the motor 3 acting as a load 3. The inverter unit 6 of the frequency controller 2 can be realised for example with IGBT transistors (IGBT, Insulated-gate bipolar transistor).

Electric drives are typically used in very demanding applications. Especially, in most of the applications used, the demand for a most optimal and reliable operation and for operational efficiency constantly increasing. The operation of an electric drive apparatus depends upon the most optimal configuration and upon the most optimal electric drive parameter set up. When electric drives are used in an application to drive the load, e.g. a motor, optimally, energy will be saved considerably. On the other hand, when electric drives are not used correctly or are not having the most optimal configuration in an application, energy savings will not be that great.

In a typical electric drive application, there are several subsystems in the electric drive apparatus and in the application setting that may all contribute to reliable operation and to the overall operational efficiency of the electric drive application. For example in Figure 1, the functioning of the rectifier unit 4, the fixed DC voltage intermediate circuit 5 and the inverter unit 6 as subsystems 4 to 6 of the frequency controller 2 as well as the functioning of the input power feed 1 and the load 3 may all contribute to reliable operation and to the overall operational efficiency of the particular electric drive application. Each one of said several subsystems in the electric drive apparatus may have several drive parameters that need to be correctly configured for most optimal configuration. An example of a prior art a method and arrangement for interacting with an industrial device to adjusting and optimizing of industrial device parameters of said industrial device is disclosed in a European Patent Application Publication EP 3220609 A1.

In a typical installation of an electric drive application setting electric drives are many times being replaced by a newer models as the existing electric drive apparatuses are broken or outdated. The newly installed electric drive apparatus also needs to be configured with a new set of parameter settings in accordance with the present electric drive application setting. This is problematic and time consuming. In some cases, it even may take some time while operating the electric drive in order to reach the most optimal configuration.

The evolvement of communication technology, particularly wireless communication technology and end user devices, has enabled versatile communication possibilities and introduction of different services. There are smartphone applications that allow a user of the smartphone to receive service recommendations for a machine, store operational data on the machine over the network connection, and troubleshoot the machine.

### BRIEF DESCRIPTION OF THE DISCLOSURE

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide methods, apparatuses, a system and a computer program product for providing a conversion of a configuration parameter setting originating from an old electric drive apparatus to a converted configuration parameter setting compatible with a new electric drive apparatus.

### BRIEF DESCRIPTION OF THE DRAWINGS

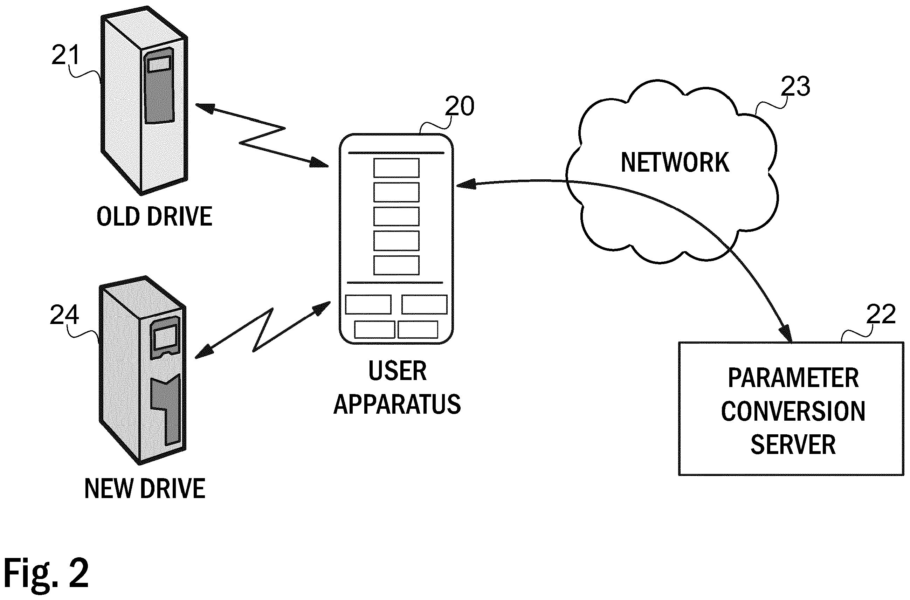

In the following, the present disclosure will be described in greater detail by way of example and with reference to the accompanying drawings, in which:
Figure 1 shows a block diagram of an electric drive according to prior art.
Figure 2 illustrates a simplified architecture of an arrangement for configuration of an electric drive apparatus system and some apparatuses according to an exemplary embodiment of the present disclosure.
Figure 3 illustrates exemplary information exchange according to an exemplary embodiment of the present disclosure.
Figure 4 is a flow chart illustrating exemplary of a method for configuration of an electric drive apparatus according to an exemplary embodiment of the present disclosure.
Figure 5 illustrates another exemplary information exchange according to another exemplary embodiment of the present disclosure.
Figure 6 is a flow chart illustrating another exemplary of a method for configuration of an electric drive apparatus according to another exemplary embodiment of the present disclosure.
Figure 7 illustrates an apparatus according to some embodiments of the present disclosure in connection with the user apparatus/user device.
Figure 8 illustrates an apparatus according to some embodiments of the present disclosure in connection with the server.
Prior art drawing of Figure 1 has been presented earlier. In the following, the disclosure will be described in greater detail by means of preferred embodiments with reference to the accompanying drawings of Figures 2 to 8. The foregoing aspects, features and advantages of the disclosure will be apparent from the drawings and the detailed description related thereto.

### DETAILED DESCRIPTION OF SOME EMBODIMENTS

Figure 2 illustrates a simplified architecture of an arrangement for configuration of an electric drive apparatus system and some apparatuses according to an exemplary embodiment of the present disclosure. Figure 2 is a simplified system architecture only showing some elements, functional entities, which are logical units whose implementation may differ from what is shown, and some equipment. It is apparent to a person skilled in the art that the system may comprise any number of shown elements, other equipment, other functions and structures that are not illustrated.

In the embodiment illustrated in Figure 2, the electric drive apparatus system comprises one or more earlier installed old electric drives 21 (only one illustrated in Figure 2), one or more newly installed new electric drives 24 (only one illustrated in Figure 2) and one or more user apparatuses 20 (only one illustrated in Figure 2). Said one or more user apparatuses 20 are configured to communicate with said one or more earlier installed old electric drives 21 and with said one or more newly installed new electric drives 24. Said one or more user apparatuses 20 are also connected over one or more networks 23 (only one illustrated in Figure 2) to a server 22, e.g. a parameter conversion server 22, said server 22 configured to carry out parameter conversion for electric drives in said electric drive apparatus system. In the electric drive apparatus system said one or more newly installed new electric drives 24 are typically installed to replace or to complement said one or more earlier installed old electric drives 21.

In the embodiment illustrated in Figure 2, the electric drive apparatus system in an industrial site comprises one or more installed electric drives 21, 24. It should be appreciated that an electric drive 21, 24 depicts herein any device, machine, equipment, system and a process that whose operations and/or service and/or maintenance may be taken care remotely. Other examples of such equipment include frequency converters, AC/DC modules, DC/AC modules, programmable logic controllers, switches, motion controllers or motion drives, servo motors, soft starters, robots, cars, and heavy equipment, etc. It should be appreciated that in the above only some examples are listed.

The electric drive apparatus system according to the presented exemplary embodiment also comprises a user apparatus 20. The user apparatus 20 refers to a computing device (equipment), that may be a non-portable device or a portable device (mobile device), and it may also be referred to as a user terminal or user device. Portable computing devices (apparatuses) include wireless mobile communication devices operating with or without a subscriber identification module (SIM) in hardware or in software, including, but not limited to, the following types of devices: mobile phone, smart-phone, personal digital assistant (PDA), laptop and/or touch screen computer, tablet (tablet computer), multimedia device, wearable computer and other types of wearable devices, such as clothing and accessories incorporating computer and advanced electronic technologies. The user apparatus 20 is configured to support configuration of an electric drive apparatus.

In the illustrated example, the user apparatus 20 has at least two communications interfaces, one to connect to the server 22 wirelessly over one or more networks 23 and one to connect to said one or more installed electric drives 21, 24 over a local connection. The wireless connection to the service center may be provided by any mobile system, such as GSM, GPRS, LTE, 4G, 5G and beyond, or a combination of a mobile system and a fixed system, like Wi-Fi or Li-Fi providing access to internet and via internet to the service center. The local connection may be provided naturally over a mobile system but it may be provided by a direct connection, for example using Bluetooth, or by a local network, like Wi-Fi or Li-Fi. The number of reception and/or transmission antennas (not illustrated in Figure 2), or other communication interfaces, of said user apparatus 20 may naturally vary according to a current implementation, and the user apparatus type.

The one or more networks 23 (communications networks) may comprise one or more wireless networks, wherein a wireless network may be based on any mobile system, such as GSM, GPRS, LTE, 4G, 5G and beyond, or a wireless local area network, such as Wi-Fi, Li-Fi. Further, the one or more networks 23 may comprise one or more fixed networks and internet.

In the illustrated example the server 22, like a cloud server or a grid server, refers herein to a combination of a data storage and a data management system. The data storage may be any kind of conventional or future data repository, including distributed and centralized storing of data, a cloud-based storage in a cloud environment, managed by any suitable management system. The implementation of the data storage, the manner how data is stored, retrieved and updated are irrelevant to the disclosure, and therefore not described in detail here. The server 22 comprises a connection over the one or more networks 23 to said user apparatus 20.

In a typical of electric drive apparatus setup the control software of the electric drive is usually executed on the specific central processing unit (CPU) which control software is typically embedded very closely to drive hardware. Control software has multiple tasks to control the drive based on physical inputs and outputs.

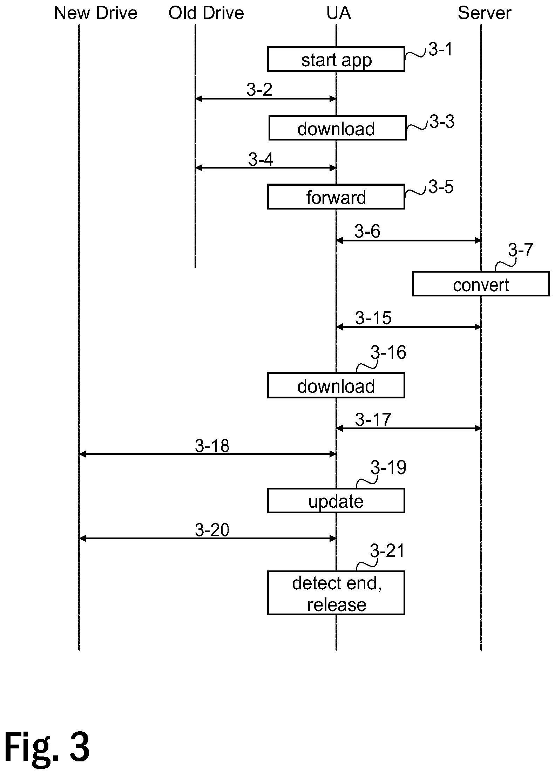

Figure 3 illustrates exemplary information exchange according to an exemplary embodiment of the present disclosure. Figure 3 illustrates information exchange in an exemplary situation in which a configuration tool application is utilized for configuration of an electric drive apparatus for example. Further, in the illustrated example it is assumed that alerting is triggered by sending a corresponding message and the alerting is continued as long as a message stopping alerting is received. However, it is a straightforward solution to implement the functionality disclosed below to a solution in which alerting is continued as long as alerting messages are received (and naturally sent) at a certain intervals. It should be appreciated that any known or future communication protocol and process to establish a session / connection may be used. Therefore, they are not described in detail herein.

Referring to Figure 3, when the user starts (point 3-1) an electric drive apparatus configuration tool, e.g. a mobile application, in a user apparatus 20, UA, a local connection to an old electric drive 21 is established (messages 3-2). However, unlike in prior art solution, the user apparatus 20 outputs in the electric drive apparatus configuration tool application a possibility to start a download of a configuration parameter setting from an earlier installed old electric drive 21, and once a user input selecting to start said download is detected in point 3-3, the user apparatus 20 (i.e. the electric drive apparatus configuration tool application in said user apparatus 20) starts the download 3-3 of said configuration parameter setting.

Thus, the download session is established between the old electric drive 21 and the user apparatus 20; the messages 3-4 illustrate the download session establishment and information exchange and download between them. The configuration parameter setting includes, but is not limited to, the drive parameter settings and process parameter settings and other relevant process information downloaded (messages 3-4) from the real electric drive of an electric drive apparatus, i.e. from said earlier installed old electric drive 21.

The downloaded configuration parameter settins may include parameters including but being not limited to: electric drive model parameters, drive component version parameters, functional drive parameters (including drive motor rating parameters), physical drive parameters, drive test parameters (including drive motor ID run result parameters), user generated parameters, drive application generated parameters, drive accessory parameters, drive optional module/hardware parameters (including field bus module parameters, functional safety module parameters, braking chopper parameters, I/O module parameters). The parameter settings may also include drive applications. The other relevant process information may include load information, torque information, motor speed information, power consumption information, or any other relevant process information.

After the download of the configuration parameter setting is completed, the user apparatus 20 detects the completion of the download and initiates in point 3-5, the forwarding the configuration parameter setting downloaded from said earlier installed old electric drive 21. The user apparatus 20 establishes in point 3-6 a session to a server 22, e.g. to a parameter conversion server 22, and forwards in point 3-6 the configuration parameter setting downloaded from said earlier installed old electric drive 21 to said server 22. The user apparatus 20 may also inform said server 22 of an indication of a newly installed new electric drive 24, e.g. based on user input to said user apparatus 20.

Referring to Figure 3, the server 22 receives in point 3-6 from the user apparatus 20 the forwarded configuration parameter setting previously downloaded from said earlier installed old electric drive 21. Having received said forwarded configuration parameter setting previously downloaded from said earlier installed old electric drive 21 as well as said indication of the newly installed new electric drive 24, the server 22 performs the conversion 3-7 of said configuration parameter setting to a new configuration parameter setting corresponding said newly installed new electric drive 24.

After the conversion 3-7 of said configuration parameter setting to a new configuration parameter setting is completed, the server 22 may inform 3-15 the user apparatus 20, e.g. by messaging, of said completed conversion. The user apparatus 20 detects the completion of the conversion and initiates a session 3-16 for downloading the new configuration parameter setting corresponding said newly installed new electric drive 24 from said server 22.

Thereafter in point 3-17, the user apparatus 20 establishes a session to said server 22 and downloads from the server 22 the new configuration parameter setting corresponding said newly installed new electric drive 24. After the download of the new configuration parameter setting is completed, the user apparatus 20 may establish a local connection to said newly installed new electric drive 24 (messages 3-18). After said local connection between the user apparatus 20 and said newly installed new electric drive 24 has been established 3-18, the user apparatus 20 initiates a session 3-19 for updating the new configuration parameter setting corresponding said newly installed new electric drive 24 from the user apparatus 20 to said newly installed new electric drive 24.

Thus, the updating session is established between the user apparatus 20 and the newly installed new electric drive 24; the messages 3-20 illustrate the updating session establishment and information exchange and updating between them. The updated new configuration parameter setting includes, but is not limited to, the drive parameter settings and process parameter settings and other relevant process information earlier downloaded, and subsequently converted, from the real electric drive of an electric drive apparatus, i.e. from said earlier installed old electric drive 21.

After the update of the new configuration parameter setting to the newly installed new electric drive 24 is completed, the electric drive apparatus configuration tool application in said user apparatus 20 may receive or detect in point 3-21 information indicating to end the session. In response to receiving, or detecting in point 3-21 information indicating to end the session, the electric drive apparatus configuration tool application in said user apparatus 20 releases in point 3-19 the session and the connection and resources reserved for them. Further, the electric drive apparatus configuration tool application may shut down, unless needed for other corresponding sessions.

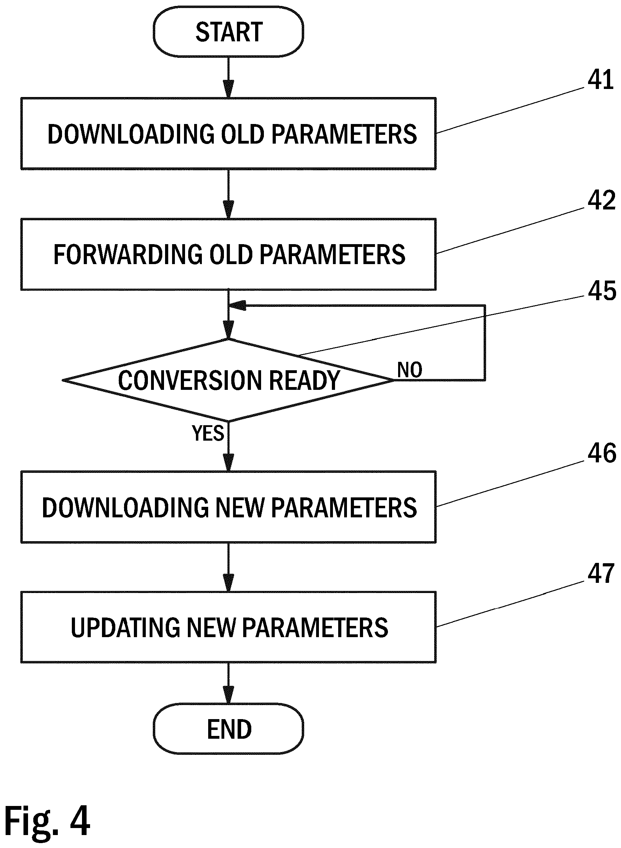

Figure 4 is a flow chart illustrating exemplary of a method for configuration of an electric drive apparatus according to an exemplary embodiment of the present disclosure. Figure 4 illustrates an exemplary functionality of an electric drive apparatus configuration tool application, e.g. a mobile application. In the example illustrated in Figure 4 it is assumed that the electric drive apparatus configuration tool application program is ended either in response to the user of the corresponding apparatus, e.g. user apparatus 20, providing such an input, or corresponding input is received from other apparatus.

Referring to Figure 4, an electric drive apparatus configuration tool application, e.g. a mobile application, is started in a user apparatus 20, UA. Thereafter, in said method for configuration of an electric drive apparatus according to the present embodiment, a configuration parameter setting from an earlier installed old electric drive 21 is downloaded 41 to said electric drive apparatus configuration tool application in said user apparatus 20. The configuration parameter setting includes, but is not limited to, the drive parameter settings, process parameter settings, and other relevant process information having some relation to said earlier installed old electric drive 21.

After the downloading 41 of the configuration parameter setting of said earlier installed old electric drive 21, the downloaded configuration parameter setting is forwarded 42 from said user apparatus 20 (i.e. from said electric drive apparatus configuration tool application in said user apparatus 20) to a server 22, e.g. to a parameter conversion server 22. Said server 22 may also receive information from said user apparatus 20 indicating a newly installed new electric drive 24 from said user apparatus 20, e.g. based on user input to said user apparatus 20.

After the forwarding 42 of the configuration parameter setting in said method for configuration of an electric drive apparatus according to the present embodiment, the conversion of said configuration parameter setting to a new configuration parameter setting is carried out in the server 22. Thereafter, the completion of said conversion is detected by the user apparatus 20 in step 45.

After the detecting 45 of the conversion of said configuration parameter setting to a new configuration parameter setting by the user apparatus 20, said new configuration parameter setting is downloaded 46 from said server to said user apparatus 20. After completing of the downloading 46 of the new configuration parameter setting of said newly installed new electric drive 24, said new configuration parameter setting is updated 47 from the user apparatus 20 to said newly installed new electric drive 24.

The updated 47 new configuration parameter setting includes, but is not limited to, the drive parameter settings and process parameter settings and other relevant process information earlier downloaded, and subsequently converted, from the real electric drive of an electric drive apparatus, i.e. from said earlier installed old electric drive 21.

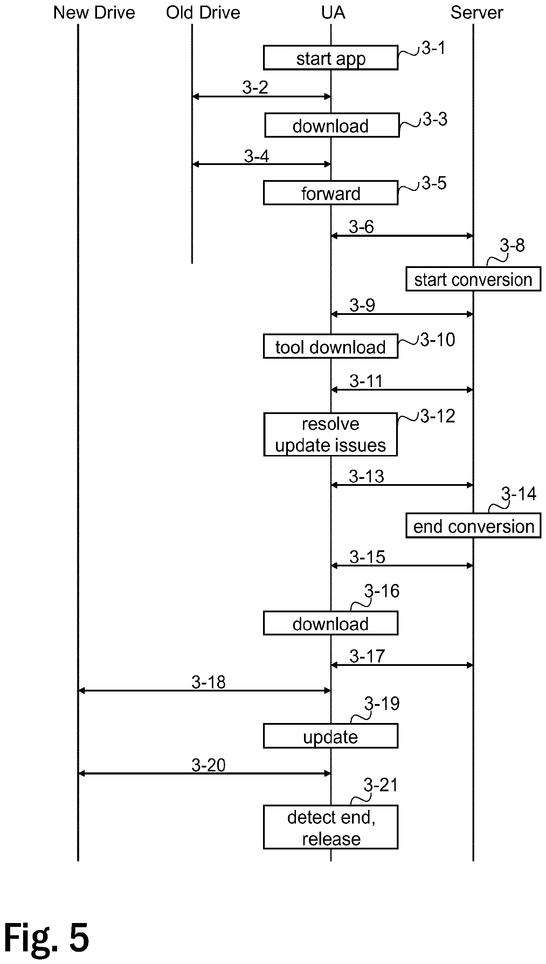

Figure 5 illustrates another exemplary information exchange according to another exemplary embodiment of the present disclosure. Figure 5 illustrates information exchange in another exemplary situation in which a configuration tool application is utilized for configuration of an electric drive apparatus for example. Further, in the illustrated example it is assumed that alerting is triggered by sending a corresponding message and the alerting is continued as long as a message stopping alerting is received. However, it is a straightforward solution to implement the functionality disclosed below to a solution in which alerting is continued as long as alerting messages are received (and naturally sent) at a certain intervals. It should be appreciated that any known or future communication protocol and process to establish a session / connection may be used. Therefore, they are not described in detail herein.

Referring to Figure 5, when the user starts (point 3-1) an electric drive apparatus configuration tool, e.g. a mobile application, in a user apparatus 20, UA, a local connection to an old electric drive 21 is established (messages 3-2). However, unlike in prior art solution, the user apparatus 20 outputs in the electric drive apparatus configuration tool application a possibility to start a download of a configuration parameter setting from an earlier installed old electric drive 21, and once a user input selecting to start said download is detected in point 3-3, the user apparatus 20 (i.e. the electric drive apparatus configuration tool application in said user apparatus 20) starts the download 3-3 of said configuration parameter setting.

Thus, the download session is between the old electric drive 21 and the user apparatus 20; the messages 3-4 illustrate the download session establishment and information exchange and download between them. The configuration parameter setting includes, but is not limited to, the drive parameter settings and process parameter settings and other relevant process information downloaded (messages 3-4) from the real electric drive of an electric drive apparatus, i.e. from said earlier installed old electric drive 21.

The downloaded configuration parameter setting may include parameters including but being not limited to: drive model parameters, drive component version parameters, functional drive parameters (including drive motor rating parameters), physical drive parameters, drive test parameters (including drive motor ID run result parameters), user generated parameters, drive application generated parameters, drive accessory parameters, drive optional module/hardware parameters (including field bus module parameters, functional safety module parameters, braking chopper parameters, I/O module parameters). The parameter settings may also include drive applications. The other relevant process information may include load information, torque information, motor speed information, power consumption information, or any other relevant process information.

After the download of the configuration parameter setting is completed, the user apparatus 20 detects the completion of the download and initiates in point 3-5, the forwarding the configuration parameter setting downloaded from said earlier installed old electric drive 21. The user apparatus 20 establishes in point 3-6 a session to a server 22, e.g. to a parameter conversion server 22, and forwards in point 3-6 the configuration parameter setting downloaded from said earlier installed old electric drive 21 to said server 22. The user apparatus 20 may also inform said server 22 of an indication of a newly installed new electric drive 24, e.g. based on user input to said user apparatus 20.

Referring to Figure 5, the server 22 receives in point 3-6 from the user apparatus 20 the forwarded configuration parameter setting previously downloaded from said earlier installed old electric drive 21. Having received said forwarded configuration parameter setting previously downloaded from said earlier installed old electric drive 21 as well as said indication of the newly installed new electric drive 24, the server 22 starts the conversion 3-8 of said configuration parameter setting to a new configuration parameter setting corresponding said newly installed new electric drive 24.

In another exemplary embodiment of the present disclosure, in the conversion process there arises conversion update issues prompting for user update input. Said conversion update issues may be any uncertainties arising from the changing/complementing said earlier installed old electric drive 21 to/with said newly installed new electric drive 24. A typical example of said conversion update issues normally due to the incompatibility of parameters from different generations of the electric drives 21, 24. As the server 22 detects said conversion update issues in the presented another exemplary embodiment, said server 22 generates a conversion update tool and informs 3-9 the user apparatus 20, e.g. by messaging, of said conversion update tool being available for download.

Thereafter, said user apparatus 20 outputs in the electric drive apparatus configuration tool application a request to download said conversion update tool, and once a user input selecting to start said download is detected in point 3-10, the user apparatus 20 (i.e. the electric drive apparatus configuration tool application in said user apparatus 20) starts the download 3-10 of said conversion update tool.

Thus, the download session is established between the server 22 and the user apparatus 20; the messages 3-11 illustrate the download session establishment and information exchange and download between them. Said conversion update tool may include, but is not limited to one or more algorithms, such as a computer program code (software) wherein the computer program code (software) is configured, when executed with at least one processor in said user apparatus 20, to cause said user apparatus 20 to output to the user one or more steps and/or questions requesting user input and/or user approval in resolving said conversion update issues, e.g. uncertainties due to the incompatibility of parameters from different generations of the electric drives 21, 24.

Referring to Figure 5, the user apparatus 20 executes the downloaded conversion update tool in point 3-12 to resolve the update issues. Said conversion update tool outputs to the user one or more steps and/or questions requesting user input and/or user approval for resolving said conversion update issues. The user may give the requested user input and/or user approval as conversion update input to said one or more steps and/or questions output by said conversion update tool. After having executed the downloaded conversion update tool and having received and/or generated a conversion update input, the user apparatus 20 informs 3-13 the server 22 of said conversion update input given by the user being available for forwarding. Thereafter, the user apparatus 20 forwards 3-13 said conversion update input to the server 22; the messages 3-13 illustrate the forwarding session establishment and information exchange and forward between them.

The server 22 receives in point 3-13 from the user apparatus 20 said forwarded conversion update input given by the user for resolving said conversion update issues. Having received said forwarded conversion update input for resolving said conversion update issues, the server 22 continues the conversion 3-14. By utilizing said forwarded conversion update input the server ends the conversion 3-14 of said configuration parameter setting to a new configuration parameter setting corresponding said newly installed new electric drive 24.

After the conversion 3-14 of said configuration parameter setting to a new configuration parameter setting is ended and completed, the server 22 may inform 3-15 the user apparatus 20, e.g. by messaging, of said completed conversion. The user apparatus 20 detects the completion of the conversion and initiates a session 3-16 for downloading the new configuration parameter setting corresponding said newly installed new electric drive 24 from said server 22.

Thereafter in point 3-17, the user apparatus 20 establishes a session to said server 22 and downloads from the server 22 the new configuration parameter setting corresponding said newly installed new electric drive 24. After the download of the new configuration parameter setting is completed, the user apparatus 20 may establish a local connection to said newly installed new electric drive 24 (messages 3-18). After said local connection between the user apparatus 20 and said newly installed new electric drive 24 has been established 3-18, the user apparatus 20 initiates a session 3-19 for updating the new configuration parameter setting corresponding said newly installed new electric drive 24 from the user apparatus 20 to said newly installed new electric drive 24.

Thus, the updating session is established between the user apparatus 20 and the newly installed new electric drive 24; the messages 3-20 illustrate the updating session establishment and information exchange and updating between them. The updated new configuration parameter setting includes, but is not limited to, the drive parameter settings and process parameter settings and other relevant process information earlier downloaded, and subsequently converted, from the real drive of an electric drive apparatus, i.e. from said earlier installed old electric drive 21.

After the update of the new configuration parameter setting to the newly installed new electric drive 24 is completed, the electric drive apparatus configuration tool application in said user apparatus 20 may receive or detect in point 3-21 information indicating to end the session. In response to receiving, or detecting in point 3-21 information indicating to end the session, the electric drive apparatus configuration tool application in said user apparatus 20 releases in point 3-19 the session and the connection and resources reserved for them. Further, the electric drive apparatus configuration tool application may shut down, unless needed for other corresponding sessions.

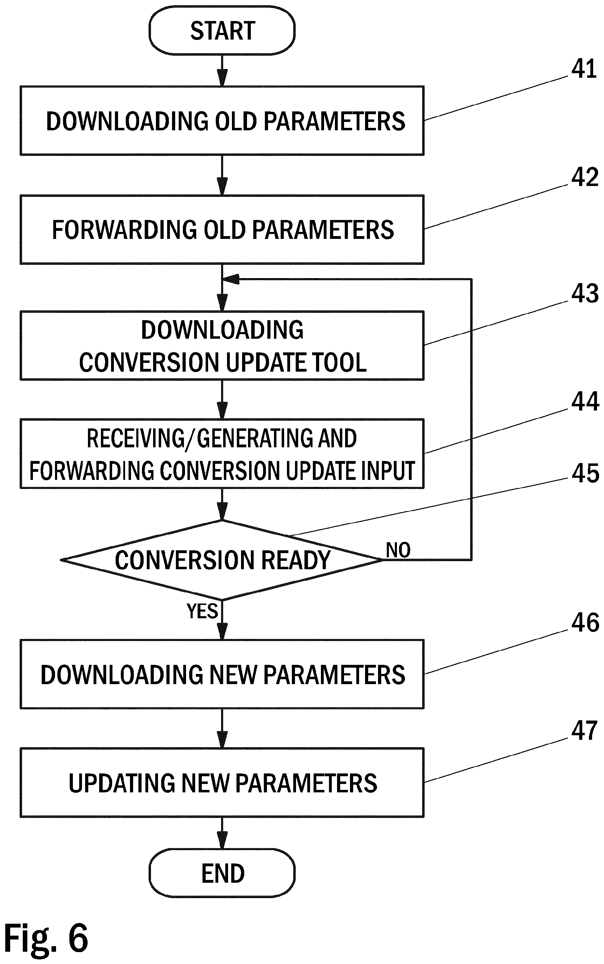

Figure 6 is a flow chart illustrating another exemplary of a method for configuration of an electric drive apparatus according to another exemplary embodiment of the present disclosure. Figure 6 illustrates another exemplary functionality of an electric drive apparatus configuration tool application, e.g. a mobile application. In the example illustrated in Figure 6 it is assumed that the electric drive apparatus configuration tool application program is ended either in response to the user of the corresponding apparatus, e.g. user apparatus 20, providing such an input, or corresponding input is received from other apparatus.

Referring to Figure 6, an electric drive apparatus configuration tool application, e.g. a mobile application, is started in a user apparatus 20, UA. Thereafter, in said method for configuration of an electric drive apparatus according to the present embodiment, a configuration parameter setting from an earlier installed old electric drive 21 is downloaded 41 to said electric drive apparatus configuration tool application in said user apparatus 20. The configuration parameter setting includes, but is not limited to, the drive parameter settings, process parameter settings, and other relevant process information having some relation to said earlier installed old electric drive 21.

After the downloading 41 of the configuration parameter setting of said earlier installed old electric drive 21, the downloaded configuration parameter setting is forwarded 42 from said user apparatus 20 (i.e. from said electric drive apparatus configuration tool application in said user apparatus 20) to a server 22, e.g. to a parameter conversion server 22. Said server 22 may also receive information from said user apparatus 20 indicating a newly installed new electric drive 24 from said user apparatus 20, e.g. based on user input to said user apparatus 20.

After the forwarding 42 of the configuration parameter setting in said method for configuration of an electric drive apparatus according to the present embodiment, the conversion of said configuration parameter setting to a new configuration parameter setting is started in the server 22.

Meanwhile, the server having received said forwarded configuration parameter setting previously downloaded from said earlier installed old electric drive 21 as well as an indication of the newly installed new electric drive 24, the server 22 has started the conversion of said configuration parameter setting to a new configuration parameter setting corresponding said newly installed new electric drive 24.

In another exemplary embodiment of the present disclosure, in the conversion process there arises conversion update issues prompting for user update input. Said conversion update issues may be any uncertainties arising from the changing/complementing said earlier installed old electric drive 21 to/with said newly installed new electric drive 24. A typical example of said conversion update issues normally due to the incompatibility of parameters from different generations of the electric drives 21, 24. As the server 22 detects said conversion update issues in the presented another exemplary embodiment, said server 22 generates a conversion update tool available for download by the user apparatus 20.

Referring to Figure 6, in another exemplary embodiment of the present disclosure, after the forwarding 42 of the configuration parameter setting in said method for configuration of an electric drive apparatus according to the present another embodiment, a conversion update tool is downloaded 43 to said user apparatus 20, e.g. to said electric drive apparatus configuration tool application in said user apparatus 20.. Said conversion update tool may include, but is not limited to one or more algorithms, such as a computer program code (software) wherein the computer program code (software) is configured, when executed with at least one processor in said user apparatus 20, to cause said user apparatus 20 to output to the user one or more steps and/or questions requesting user input and/or user approval in resolving said conversion update issues, e.g. uncertainties due to the incompatibility of parameters from different generations of the electric drives 21, 24.

After the downloading 43 of the configuration update tool, said configuration update tool is executed in said user apparatus 20 for resolving the update issues. As a result of executing said configuration update tool, a conversion update input is received/generated in said user apparatus 20 and consequently forwarded 44 from said user apparatus 20 to said server 22.

Having received said forwarded 44 conversion update input for resolving said conversion update issues, the server 22 continues and ends the conversion of said configuration parameter setting to a new configuration parameter setting corresponding said newly installed new electric drive 24. Thereafter, the completion of said conversion is detected by the user apparatus 20 in step 45.

After the detecting 45 of the conversion of said configuration parameter setting to a new configuration parameter setting by the user apparatus 20, said new configuration parameter setting is downloaded 46 from said server to said user apparatus 20. After completing of the downloading 46 of the new configuration parameter setting of said newly installed new electric drive 24, said new configuration parameter setting is updated 47 from the user apparatus 20 to said newly installed new electric drive 24.

The updated 47 new configuration parameter setting includes, but is not limited to, the drive parameter settings and process parameter settings and other relevant process information earlier downloaded, and subsequently converted, from the real electric drive of an electric drive apparatus, i.e. from said earlier installed old electric drive 21.

The steps, points, related functions, and information exchanges described above by means of Figures 3 to 6 are in no absolute chronological order, and some of them may be performed simultaneously or in an order differing from the given one. Other functions can also be executed between them or within them, and other information may be sent. Some of the steps or points or part of the steps or points or one or more pieces of information can also be left out or replaced by a corresponding step, point or part of the step, point or one or more pieces of information. For example, it should be appreciated that the user input received via a user interface and/or as received information may relate only one, two or three of the examples mentioned above with Figure 4 or with Figure 6, and/or further information exchange not expressly mentioned may be involved, using the above described principles.

The above steps, points, related functions, and information exchanges described above by means of Figures 3 to 6 do not necessarily happen at the same time and the whole process described above by means of Figures 3 to 6 does not have to be done by same persons to a single target electrical drive. For example, the converted parameter data, e.g. a new configuration parameter setting of a newly installed new electric drive 24, can be saved in the server 22 at a first time by a first user and be downloaded to one or more electric drives by another engineer later at a second different time by a second user, given that the second has proper authorization / access rights to download said new configuration parameter setting from said server 22.

The techniques and methods described herein may be implemented by various means so that a user apparatus/user device and/or a server/ database server configured to support configuration of an electric drive apparatus, based on at least partly on what is disclosed above with any of Figures 3 and 4, including implementing one or more functions/operations of a corresponding user apparatus and/or a server described above with an embodiment/example, for example by means of Figures 3 to 6, comprises not only prior art means, but also means for implementing the one or more functions/operations of a corresponding functionality described with an embodiment, for example by means of Figures 3 to 6, and it or they may comprise separate means for each separate function/operation, or means may be configured to perform two or more functions/operations. For example, one or more of the means described above may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, logic gates, other electronic units designed to perform the functions described herein by means of Figures 3 to 6, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

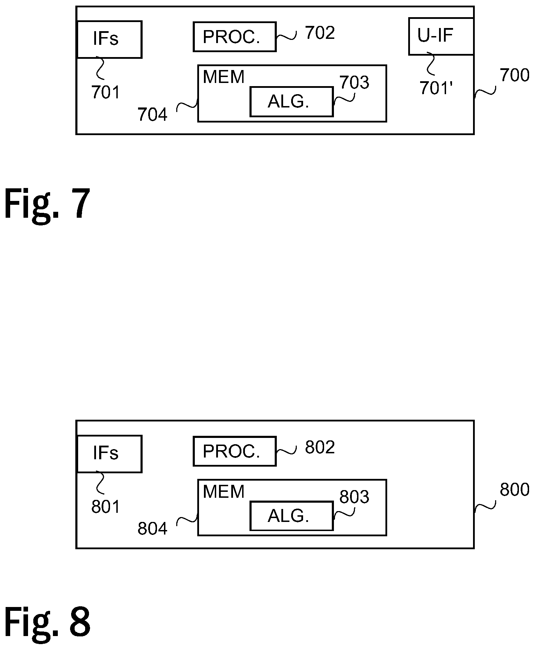

Figure 7 illustrates an apparatus according to some embodiments of the present disclosure in connection with the user apparatus/user device. Figure 7 illustrates an apparatus configured to carry out the functions described above in connection with the user apparatus/user device. Each apparatus 700 may comprise one or more communication control circuitry, such as at least one processor 702, and at least one memory 704, including one or more algorithms 703, such as a computer program code (software) wherein the at least one memory and the computer program code (software) are configured, with the at least one processor, to cause the apparatus to carry out any one of the exemplified functionalities of the user apparatus. The apparatus may further comprise different communication interfaces 701 and one or more user interfaces 701'.

Figure 8 illustrates an apparatus according to some embodiments of the present disclosure in connection with the server. Figure 8 illustrates an apparatus configured to carry out the functions described above in connection with the server. Each apparatus 800 may comprise one or more communication control circuitry, such as at least one processor 802, and at least one memory 804, including one or more algorithms 803, such as a computer program code (software) wherein the at least one memory and the computer program code (software) are configured, with the at least one processor, to cause the apparatus to carry out any one of the exemplified functionalities of the server. The memory 704 may comprise a database for storing different information, for example contact information on apparatuses, and information needed for maintenance. The apparatus may further comprise different communication interfaces 801.

The memory 704, 804 or part of it may be implemented using any suitable data storage technology, such as semiconductor based memory devices, flash memory, magnetic memory devices and systems, optical memory devices and systems, fixed memory and removable memory.

The one or more communication interfaces (TX/RX) 701, 801 may comprise hardware and/or software for realizing communication connectivity according to one or more communication protocols. The communication interface 701, 801 may comprise standard well-known components such as an amplifier, filter, frequency-converter, (de)modulator, and encoder/decoder circuitries and one or more antennas. The communication interfaces 701, 801 may comprise radio interface components and/or other wireless interface components providing the apparatus with wireless communication capability.

A user interface 701' may be any kind of a user interface, for example a screen, microphone, headset, head-mounted display, and/or one or more loudspeakers for interaction with the user.

With the help of the present disclosure, the conversion tool for configuration parameter setting of existing old electric drive can be synchronized and maintained by the electric drive manufacturer/vendor in a central server, e.g. an electric drive vendor cloud database for said installed electric drives.

With the help of the present disclosure, a user, e.g. a customer or a service engineer, can convert the configuration parameter setting of existing old electric drive to the new electric drive by using a user apparatus, e.g. a mobile phone via a Bluetooth connection, said user apparatus being connected to a central server synchronized and maintained by the electric drive manufacturer/vendor. Said central server can e.g. be realized as an intelligent cloud-based storage server. Said central server according to the present disclosure detects the electric drive model and convert the configuration parameter setting automatically according to the new electric drive model so that the customer can make the electric drive migration automatically.

In case there arises conversion update issues, e.g. the configuration parameter setting not anymore being compatible, in which case conversion update input, e.g. manual resolution, is required, said central server can then help connect to a human service engineer for remotely helping the customer step by step update the configuration parameter setting and carry out the update to the new electric drive. Alternatively, said central server can automatically generate a conversion update tool for download to customer user apparatus for helping the customer step by step update the configuration parameter setting and carry out the update to the new electric drive. After the conversion process is completed in said central server, the new configuration parameter setting can be set into the new electric drive.

As used in this application, the term "circuitry" refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of "circuitry" applies to all uses of this term in this application. As a further example, as used in this application, the term "circuitry"' would also cover an implementation of merely a processor (or multiple processors) or a portion of a processor and its (or their) accompanying software and/or firmware. The term "circuitry" would also cover, for example and if applicable to the particular element, a baseband integrated circuit or applications processor integrated circuit for a user apparatus or a similar integrated circuit in a service desk, or in a server.

In an embodiment, the at least one processor, the memory, and the computer program code form processing means or comprises one or more computer program code portions for carrying out one or more operations according to any one of the embodiments of Figures 3 to 6 or operations thereof.

Embodiments as described may also be carried out in the form of a computer process defined by a computer program or portions thereof. Embodiments of the methods described in connection with Figures 3 to 6 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electric carrier signal, telecommunications signal, and software distribution package, for example. The computer program medium may be a non-transitory medium. Coding of software for carrying out the embodiments as shown and described is well within the scope of a person of ordinary skill in the art.

## Claims

1. A method comprising:
- starting (3-1) in a user apparatus (20), (700) a configuration tool application, said user apparatus (20), (700) having a connection with an at least one electric drive apparatus in a local site;
- downloading (3-3, 3-4), (41) by said user apparatus (20), (700) from a first electric drive apparatus of said at least one electric drive apparatus a first configuration parameter setting from said first electric drive apparatus;
- forwarding (3-5, 3-6), (42) by said user apparatus (20), (700) said configuration parameter setting of said first electric drive apparatus to a server apparatus (22), (800);
**characterized in that** said method further comprises:
- receiving (3-16, 3-17), (46) by said user apparatus (20), (700) a second configuration parameter setting from said server apparatus (22), (800), said second configuration parameter setting being converted from a first configuration parameter setting to be compatible with a second electric drive apparatus of said at least one electric drive apparatus; and
- forwarding (3-19, 3-20), (47) by said user apparatus (20), (700) said second configuration parameter setting to said second electric drive apparatus.

2. The method according to claim 1, **characterized in that** said method further comprises after forwarding (3-5, 3-6), (42) said configuration parameter settings of said first electric drive apparatus to said server apparatus (22), (800):
- downloading (3-11, 3-11), (43) by said user apparatus (20), (700) a conversion update tool, said conversion update tool adapted for requesting and receiving an at least one conversion update input from a user; and
- forwarding by said user apparatus (20), (700) said an at least one conversion update input to said second electric drive apparatus.

3. A method comprising:
- receiving in a server apparatus (22), (800) from a user apparatus (20), (700), said user apparatus (20), (700) having a connection with an at least one electric drive apparatus in a local site, a configuration parameter setting of a first electric drive apparatus of said at least one electric drive apparatus;
**characterized in that** said method further comprises:
- converting by said server apparatus (22), (800) a second configuration parameter setting from a first configuration parameter setting, said second configuration parameter setting being converted to be compatible with a second electric drive apparatus of said at least one electric drive apparatus; and
- forwarding by said server apparatus (22), (800) said second configuration parameter setting to said user apparatus (20), (700).

4. The method according to claim 3, **characterized in that** said method further comprises after receiving said configuration parameter settings of said first electric drive apparatus:
- forwarding by said server apparatus (22), (800) a conversion update tool to said user apparatus (20), (700), said conversion update tool adapted for requesting and receiving an at least one conversion update input from a user; and
- receiving by said server apparatus (22), (800) said an at least one conversion update input to said first electric drive apparatus.

5. A computer program product comprising a non-transitory computer-readable storage medium having stored thereon computer program instructions, **characterized in that** when said computer program instructions are run by at least one processor, cause the at least one processor to:
- download (3-3, 3-4), (41), when a configuration tool application is started (3-1) in a user apparatus (20), (700) comprising the processor and having a connection with an at least one electric drive apparatus in a local site, from a first electric drive apparatus of said at least one electric drive apparatus a first configuration parameter setting from said first electric drive apparatus;
- cause forwarding (3-5, 3-6), (42) by said user apparatus (20), (700) said configuration parameter setting of said first electric drive apparatus to a server apparatus (22), (800);
- cause receiving (3-16, 3-17), (46) by said user apparatus (20), (700) a second configuration parameter setting from said server apparatus (22), (800), said second configuration parameter setting being converted from a first configuration parameter setting to be compatible with a second electric drive apparatus of said at least one electric drive apparatus; and
- cause forwarding (3-19, 3-20), (47) by said user apparatus (20), (700) said second configuration parameter setting to said second electric drive apparatus.

6. The computer program product according to claim 5, **characterized in that** said computer program product further comprises a non-transitory computer-readable storage medium having stored thereon computer program instructions which, when run by at least one processor, cause the at least one processor after forwarding (3-5, 3-6), (42) said configuration parameter settings of said first electric drive apparatus to said server apparatus (22), (800) to:
- download (3-11, 3-11), (43) a conversion update tool, said conversion update tool adapted for requesting and receiving an at least one conversion update input from a user; and
- cause forwarding by said user apparatus (20), (700) said an at least one conversion update input to said second electric drive apparatus.

7. A computer program product comprising a non-transitory computer-readable storage medium having stored thereon computer program instructions, **characterized in that** when said computer program instructions are run by at least one processor, cause the at least one processor to:
- cause receiving, in a server apparatus (22), (800) comprising the processor, from a user apparatus (20), (700), said user apparatus (20), (700) having a connection with an at least one electric drive apparatus in a local site, a configuration parameter setting of a first electric drive apparatus of said at least one electric drive apparatus;
- convert a second configuration parameter setting from a first configuration parameter setting, said second configuration parameter setting being converted to be compatible with a second electric drive apparatus of said at least one electric drive apparatus; and
- cause forwarding by said server apparatus (22), (800) said second configuration parameter setting to said user apparatus (20), (700).

8. The computer program product according to claim 7, **characterized in that** said computer program product further comprises a non-transitory computer-readable storage medium having stored thereon computer program instructions which, when run by at least one processor, cause the at least one processor after receiving said configuration parameter settings of said first electric drive apparatus to:
- cause forwarding by said server apparatus (22), (800) a conversion update tool to said user apparatus (20), (700), said conversion update tool adapted for requesting and receiving an at least one conversion update input from a user; and
- receiving by said server apparatus (22), (800) said an at least one conversion update input to said first electric drive apparatus.

9. A user apparatus (20), (700) comprising at least one processor, and at least one memory including computer program code, **characterized in that** said at least one memory and the computer program code are configured to, with the at least one processor, cause the user apparatus (20), (700) at least to:
- start (3-1) in the user apparatus (20), (700) a configuration tool application, said user apparatus (20), (700) having a connection with an at least one electric drive apparatus in a local site;
- download (3-3, 3-4), (41), by the user apparatus (20), (700) from a first electric drive apparatus of said at least one electric drive apparatus a first configuration parameter setting from said first electric drive apparatus;
- forward (3-5, 3-6), (42), by the user apparatus (20), (700) said configuration parameter setting of said first electric drive apparatus to a server apparatus (22), (800);
- receive (3-16, 3-17), (46), by the user apparatus (20), (700) a second configuration parameter setting from said server apparatus (22), (800), said second configuration parameter setting being converted from a first configuration parameter setting to be compatible with a second electric drive apparatus of said at least one electric drive apparatus; and
- forward (3-19, 3-20), (47), by the user apparatus (20), (700) said second configuration parameter setting to said second electric drive apparatus.

10. The user apparatus (20), (700) according to claim 9, **characterized in that** said at least one memory and the computer program code are configured to, with the at least one processor, further after forwarding (3-5, 3-6), (42) said configuration parameter settings of said first electric drive apparatus to said server apparatus (22), (800) cause the user apparatus (20), (700) at least to:
- arrange a connection to a support person for support in the converting said first configuration parameter setting to said second configuration parameter setting.

11. The user apparatus (20), (700) according to claim 9, **characterized in that** said at least one memory and the computer program code are configured to, with the at least one processor, further after forwarding (3-5, 3-6), (42) said configuration parameter settings of said first electric drive apparatus to said server apparatus (22), (800) cause the user apparatus (20), (700) at least to:
- download (3-11, 3-11), (43) by said user apparatus (20), (700) a conversion update tool, said conversion update tool adapted for requesting and receiving an at least one conversion update input from a user; and
- forward by said user apparatus (20), (700) said an at least one conversion update input to said second electric drive apparatus.

12. A server apparatus (22), (800), the server apparatus (22), (800) comprising at least one processor, and at least one memory including computer program code, **characterized in that** said at least one memory and the computer program code are configured to, with the at least one processor, cause the server apparatus (22), (800) at least to:
- receive in the server apparatus (22), (800) from a user apparatus (20), (700), said user apparatus (20), (700) having a connection with an at least one electric drive apparatus in a local site, a configuration parameter setting of a first electric drive apparatus of said at least one electric drive apparatus;
- convert by the server apparatus (22), (800) a second configuration parameter setting from a first configuration parameter setting, said second configuration parameter setting being converted to be compatible with a second electric drive apparatus of said at least one electric drive apparatus; and
- forward by the server apparatus (22), (800) said second configuration parameter setting to said user apparatus (20), (700).

13. A system, **characterized in that** said system comprises at least:
- one or more sites, a site comprising with an at least one electric drive apparatus that comprises one or more wireless interfaces to enable local connections;
- at least one server apparatus according to claim 12; and
- one or more user apparatuses according to claim 9.

14. The system according to claim 13, **characterized in that** the at least one server apparatus (22), (800) is further configured to arrange a connection to a support person for support in the converting said first configuration parameter setting to said second configuration parameter setting.

15. The system according to claim 13, **characterized in that**:
- the at least one server apparatus (22), (800) is further configured to forward a conversion update tool to said user apparatus (20), (700), said conversion update tool adapted for requesting and receiving an at least one conversion update input from a user and to receive said an at least one conversion update input to said first electric drive apparatus; and
- the user apparatus (20), (700) is further configured to download (3-11, 3-11), (43) a conversion update tool, said conversion update tool adapted for requesting and receiving an at least one conversion update input from a user; and to forward said an at least one conversion update input to said second electric drive apparatus.

## Patentansprüche

1. Verfahren, umfassend:
- Starten (3-1), in einer Benutzervorrichtung (20), (700), einer Konfigurationswerkzeug-Anwendung, wobei die Benutzervorrichtung (20), (700) eine Verbindung mit mindestens einer elektrischen Antriebsvorrichtung an einem lokalen Standort aufweist;
- Herunterladen (3-3, 3-4), (41), durch die Benutzervorrichtung (20), (700) von einer ersten elektrischen Antriebsvorrichtung der mindestens einen elektrischen Antriebsvorrichtung, einer ersten Konfigurationsparametereinstellung von der ersten elektrischen Antriebsvorrichtung;
- Weiterleiten (3-5, 3-6), (42), durch die Benutzervorrichtung (20), (700), der Konfigurationsparametereinstellung der ersten elektrischen Antriebsvorrichtung an eine Servervorrichtung (22), (800);
**dadurch gekennzeichnet, dass** das Verfahren ferner umfasst:
- Empfangen (3-16, 3-17), (46), durch die Benutzervorrichtung (20), (700), einer zweiten Konfigurationsparametereinstellung von der Servervorrichtung (22), (800), wobei die zweite Konfigurationsparametereinstellung von einer ersten Konfigurationsparametereinstellung umgewandelt wird, um mit einer zweiten elektrischen Antriebsvorrichtung der mindestens einen elektrischen Antriebsvorrichtung kompatibel zu sein; und
- Weiterleiten (3-19, 3-20), (47), durch die Benutzervorrichtung (20), (700), der zweiten Konfigurationsparametereinstellung an die zweite elektrische Antriebsvorrichtung.

2. Verfahren nach Anspruch 1, **dadurch gekennzeichnet, dass** das Verfahren nach dem Weiterleiten (3-5, 3-6), (42) der Konfigurationsparametereinstellungen der ersten elektrischen Antriebsvorrichtung an die Servervorrichtung (22), (800) ferner umfasst:
- Herunterladen (3-11, 3-11), (43), durch die Benutzervorrichtung (20), (700), eines Umwandlungsaktualisierungswerkzeugs, wobei das Umwandlungsaktualisierungswerkzeug angepasst ist zum Anfordern und Empfangen mindestens einer Umwandlungsaktualisierungseingabe von einem Benutzer; und
- Weiterleiten, durch die Benutzervorrichtung (20), (700), der mindestens einen Umwandlungsaktualisierungseingabe an die zweite elektrische Antriebsvorrichtung.

3. Verfahren, umfassend:
- Empfangen, in einer Servervorrichtung (22), (800) von einer Benutzervorrichtung (20), (700), wobei die Benutzervorrichtung (20), (700) eine Verbindung mit mindestens einer elektrischen Antriebsvorrichtung an einem lokalen Standort aufweist, einer Konfigurationsparametereinstellung einer ersten elektrischen Antriebsvorrichtung der mindestens einen elektrischen Antriebsvorrichtung;
**dadurch gekennzeichnet, dass** das Verfahren ferner umfasst:
- Umwandeln, durch die Servervorrichtung (22), (800), einer zweiten Konfigurationsparametereinstellung von einer ersten Konfigurationsparametereinstellung, wobei die zweite Konfigurationsparametereinstellung umgewandelt wird, um mit einer zweiten elektrischen Antriebsvorrichtung der mindestens einen elektrischen Antriebsvorrichtung kompatibel zu sein; und
- Weiterleiten, durch die Servervorrichtung (22), (800), der zweiten Konfigurationsparametereinstellung an die Benutzervorrichtung (20), (700) .

4. Verfahren nach Anspruch 3, **dadurch gekennzeichnet, dass** das Verfahren nach dem Empfangen der Konfigurationsparametereinstellungen der ersten elektrischen Antriebsvorrichtung ferner umfasst:
- Weiterleiten, durch die Servervorrichtung (22), (800), eines Umwandlungsaktualisierungswerkzeugs an die Benutzervorrichtung (20), (700), wobei das Umwandlungsaktualisierungswerkzeug angepasst ist zum Anfordern und Empfangen mindestens einer Umwandlungsaktualisierungseingabe von einem Benutzer; und
- Empfangen, durch die Servervorrichtung (22), (800), der mindestens einen Umwandlungsaktualisierungseingabe in die erste elektrische Antriebsvorrichtung.

5. Computerprogrammprodukt, umfassend ein nichttransitorisches computerlesbares Speichermedium mit darin gespeicherten Computerprogrammanweisungen, **dadurch gekennzeichnet, dass**, wenn die Computerprogrammanweisungen durch mindestens einen Prozessor ausgeführt werden, sie den mindestens einen Prozessor veranlassen zum:
- Herunterladen (3-3, 3-4), (41), wenn eine Konfigurationswerkzeug-Anwendung in einer Benutzervorrichtung (20), (700) gestartet wird (3-1), die den Prozessor umfasst und eine Verbindung mit mindestens einer elektrischen Antriebsvorrichtung an einem lokalen Standort aufweist, von einer ersten elektrischen Antriebsvorrichtung der mindestens einen elektrischen Antriebsvorrichtung, einer ersten Konfigurationsparametereinstellung von der ersten elektrischen Antriebsvorrichtung;
- Veranlassen des Weiterleitens (3-5, 3-6), (42), durch die Benutzervorrichtung (20), (700), der Konfigurationsparametereinstellung der ersten elektrischen Antriebsvorrichtung an eine Servervorrichtung (22), (800);
- Veranlassen des Empfangens (3-16, 3-17), (46), durch die Benutzervorrichtung (20), (700), einer zweiten Konfigurationsparametereinstellung von der Servervorrichtung (22), (800), wobei die zweite Konfigurationsparametereinstellung von einer ersten Konfigurationsparametereinstellung umgewandelt wird, um mit einer zweiten elektrischen Antriebsvorrichtung der mindestens einen elektrischen Antriebsvorrichtung kompatibel zu sein; und
- Veranlassen des Weiterleitens (3-19, 3-20), (47), durch die Benutzervorrichtung (20), (700), der zweiten Konfigurationsparametereinstellung an die zweite elektrische Antriebsvorrichtung.

6. Computerprogrammprodukt nach Anspruch 5,
**dadurch gekennzeichnet, dass** das Computerprogrammprodukt ferner ein nichttransitorisches computerlesbares Speichermedium mit darin gespeicherten Computerprogrammanweisungen umfasst, die, wenn sie durch mindestens einen Prozessor ausgeführt werden, den mindestens einen Prozessor nach dem Weiterleiten (3-5, 3-6), (42) der Konfigurationsparametereinstellungen der ersten elektrischen Antriebsvorrichtung an die Servervorrichtung (22), (800) veranlassen zum:
- Herunterladen (3-11, 3-11), (43) eines Umwandlungsaktualisierungswerkzeugs, wobei das Umwandlungsaktualisierungswerkzeug angepasst ist zum Anfordern und Empfangen mindestens einer Umwandlungsaktualisierungseingabe von einem Benutzer; und
- Veranlassen des Weiterleitens, durch die Benutzervorrichtung (20), (700), der mindestens einen Umwandlungsaktualisierungseingabe an die zweite elektrische Antriebsvorrichtung.

7. Computerprogrammprodukt, umfassend ein nichttransitorisches computerlesbares Speichermedium mit darin gespeicherten Computerprogrammanweisungen, **dadurch gekennzeichnet, dass**, wenn die Computerprogrammanweisungen durch mindestens einen Prozessor ausgeführt werden, sie den mindestens einen Prozessor veranlassen zum:
- Veranlassen des Empfangens, in einer Servervorrichtung (22), (800), die den Prozessor umfasst, von einer Benutzervorrichtung (20), (700), wobei die Benutzervorrichtung (20), (700) eine Verbindung mit mindestens einer elektrischen Antriebsvorrichtung an einem lokalen Standort aufweist, einer Konfigurationsparametereinstellung einer ersten elektrischen Antriebsvorrichtung der mindestens einen elektrischen Antriebsvorrichtung;
- Umwandeln einer zweiten Konfigurationsparametereinstellung von einer ersten Konfigurationsparametereinstellung, wobei die zweite Konfigurationsparametereinstellung umgewandelt wird, um mit einer zweiten elektrischen Antriebsvorrichtung der mindestens einen elektrischen Antriebsvorrichtung kompatibel zu sein; und
- Veranlassen des Weiterleitens, durch die Servervorrichtung (22), (800), der zweiten Konfigurationsparametereinstellung an die Benutzervorrichtung (20), (700).

8. Computerprogrammprodukt nach Anspruch 7,
**dadurch gekennzeichnet, dass** das Computerprogrammprodukt ferner ein nichttransitorisches computerlesbares Speichermedium mit darin gespeicherten Computerprogrammanweisungen umfasst, die, wenn sie durch mindestens einen Prozessor ausgeführt werden, den mindestens einen Prozessor nach dem Empfangen der Konfigurationsparametereinstellungen der ersten elektrischen Antriebsvorrichtung veranlassen zum:
- Veranlassen des Weiterleitens, durch die Servervorrichtung (22), (800), eines Umwandlungsaktualisierungswerkzeugs an die Benutzervorrichtung (20), (700), wobei das Umwandlungsaktualisierungswerkzeug angepasst ist zum Anfordern und Empfangen mindestens einer Umwandlungsaktualisierungseingabe von einem Benutzer; und
- Empfangen, durch die Servervorrichtung (22), (800), der mindestens einen Umwandlungsaktualisierungseingabe in die erste elektrische Antriebsvorrichtung.

9. Benutzervorrichtung (20), (700), umfassend mindestens einen Prozessor und mindestens einen Speicher, der Computerprogrammcode enthält, **dadurch gekennzeichnet, dass** der mindestens eine Speicher und der Computerprogrammcode konfiguriert sind, mit dem mindestens einen Prozessor die Benutzervorrichtung (20), (700) zu veranlassen mindestens zum:
- Starten (3-1), in der Benutzervorrichtung (20), (700), einer Konfigurationswerkzeug-Anwendung, wobei die Benutzervorrichtung (20), (700) eine Verbindung mit mindestens einer elektrischen Antriebsvorrichtung an einem lokalen Standort aufweist;
- Herunterladen (3-3, 3-4), (41), durch die Benutzervorrichtung (20), (700) von einer ersten elektrischen Antriebsvorrichtung der mindestens einen elektrischen Antriebsvorrichtung, einer ersten Konfigurationsparametereinstellung von der ersten elektrischen Antriebsvorrichtung;
- Weiterleiten (3-5, 3-6), (42), durch die Benutzervorrichtung (20), (700), der Konfigurationsparametereinstellung der ersten elektrischen Antriebsvorrichtung an eine Servervorrichtung (22), (800);
- Empfangen (3-16, 3-17), (46), durch die Benutzervorrichtung (20), (700), einer zweiten Konfigurationsparametereinstellung von der Servervorrichtung (22), (800), wobei die zweite Konfigurationsparametereinstellung von einer ersten Konfigurationsparametereinstellung umgewandelt wird, um mit einer zweiten elektrischen Antriebsvorrichtung der mindestens einen elektrischen Antriebsvorrichtung kompatibel zu sein; und
- Weiterleiten (3-19, 3-20), (47), durch die Benutzervorrichtung (20), (700), der zweiten Konfigurationsparametereinstellung an die zweite elektrische Antriebsvorrichtung.

10. Benutzervorrichtung (20), (700) nach Anspruch 9,
**dadurch gekennzeichnet, dass** der mindestens eine Speicher und der Computerprogrammcode konfiguriert sind, mit dem mindestens einen Prozessor ferner nach dem Weiterleiten (3-5, 3-6), (42) der Konfigurationsparametereinstellungen der ersten elektrischen Antriebsvorrichtung an die Servervorrichtung (22), (800) die Benutzervorrichtung (20), (700) zu veranlassen mindestens zum:
- Einrichten einer Verbindung mit einer Unterstützungsperson für Unterstützung beim Umwandeln der ersten Konfigurationsparametereinstellung in die zweite Konfigurationsparametereinstellung.

11. Benutzervorrichtung (20), (700) nach Anspruch 9,
**dadurch gekennzeichnet, dass** der mindestens eine Speicher und der Computerprogrammcode konfiguriert sind, mit dem mindestens einen Prozessor ferner nach dem Weiterleiten (3-5, 3-6), (42) der Konfigurationsparametereinstellungen der ersten elektrischen Antriebsvorrichtung an die Servervorrichtung (22), (800) die Benutzervorrichtung (20), (700) zu veranlassen mindestens zum:
- Herunterladen (3-11, 3-11), (43), durch die Benutzervorrichtung (20), (700), eines Umwandlungsaktualisierungswerkzeugs, wobei das Umwandlungsaktualisierungswerkzeug angepasst ist zum Anfordern und Empfangen mindestens einer Umwandlungsaktualisierungseingabe von einem Benutzer; und
- Weiterleiten, durch die Benutzervorrichtung (20), (700), der mindestens einen Umwandlungsaktualisierungseingabe an die zweite elektrische Antriebsvorrichtung.

12. Servervorrichtung (22), (800), die Servervorrichtung (22), (800) umfassend mindestens einen Prozessor und mindestens einen Speicher, der Computerprogrammcode enthält, **dadurch gekennzeichnet, dass** der mindestens eine Speicher und der Computerprogrammcode konfiguriert sind, mit dem mindestens einen Prozessor die Servervorrichtung (22), (800) zu veranlassen mindestens zum:
- Empfangen, in der Servervorrichtung (22), (800) von einer Benutzervorrichtung (20), (700), wobei die Benutzervorrichtung (20), (700) eine Verbindung mit mindestens einer elektrischen Antriebsvorrichtung an einem lokalen Standort aufweist, einer Konfigurationsparametereinstellung einer ersten elektrischen Antriebsvorrichtung der mindestens einen elektrischen Antriebsvorrichtung;
- Umwandeln, durch die Servervorrichtung (22), (800), einer zweiten Konfigurationsparametereinstellung von einer ersten Konfigurationsparametereinstellung, wobei die zweite Konfigurationsparametereinstellung umgewandelt wird, um mit einer zweiten elektrischen Antriebsvorrichtung der mindestens einen elektrischen Antriebsvorrichtung kompatibel zu sein; und
- Weiterleiten, durch die Servervorrichtung (22), (800), der zweiten Konfigurationsparametereinstellung an die Benutzervorrichtung (20), (700).

13. System, **dadurch gekennzeichnet, dass** das System mindestens umfasst:
- einen oder mehrere Standorte, wobei ein Standort mindestens eine elektrische Antriebsvorrichtung umfasst, die eine oder mehrere drahtlose Schnittstellen umfasst, um lokale Verbindungen zu ermöglichen;
- mindestens eine Servervorrichtung nach Anspruch 12; und
- eine oder mehrere Benutzervorrichtungen nach Anspruch 9.

14. System nach Anspruch 13, **dadurch gekennzeichnet, dass** die mindestens eine Servervorrichtung (22), (800) ferner konfiguriert ist zum Einrichten einer Verbindung mit einer Unterstützungsperson für Unterstützung beim Umwandeln der ersten Konfigurationsparametereinstellung in die zweite Konfigurationsparametereinstellung.

15. System nach Anspruch 13, **dadurch gekennzeichnet, dass**:
- die mindestens eine Servervorrichtung (22), (800) ferner konfiguriert ist zum Weiterleiten eines Umwandlungsaktualisierungswerkzeugs an die Benutzervorrichtung (20), (700), wobei das Umwandlungsaktualisierungswerkzeug angepasst ist zum Anfordern und Empfangen mindestens einer Umwandlungsaktualisierungseingabe von einem Benutzer und zum Empfangen der mindestens einen Umwandlungsaktualisierungseingabe in die erste elektrischen Antriebsvorrichtung; und
- die Benutzervorrichtung (20), (700) ferner konfiguriert ist zum Herunterladen (3-11, 3-11), (43) eines Umwandlungsaktualisierungswerkzeugs, wobei das Umwandlungsaktualisierungswerkzeug angepasst ist zum Anfordern und Empfangen mindestens einer Umwandlungsaktualisierungseingabe von einem Benutzer; und zum Weiterleiten der mindestens einen Umwandlungsaktualisierungseingabe an die zweite elektrische Antriebsvorrichtung.

## Revendications

1. Procédé comprenant les étapes suivantes :
- démarrer (3-1) dans un appareil utilisateur (20), (700) une application d'outil de configuration, ledit appareil utilisateur (20) (700) ayant une connexion avec un au moins un appareil à commande électrique dans un site local ;
- télécharger (3-3, 3-4), (41) par ledit appareil utilisateur (20), (700) depuis un premier appareil à commande électrique dudit au moins un appareil à commande électrique, un premier réglage de paramètres de configuration dudit premier appareil à commande électrique ;
- transmettre (3-5, 3-6), (42) par ledit appareil utilisateur (20), (700) ledit réglage de paramètres de configuration dudit premier appareil à commande électrique à un appareil serveur (22), (800) ; **caractérisé en ce que** ledit procédé comprend en outre les étapes suivantes :
- recevoir (3-16, 3-17), (46) par ledit appareil utilisateur (20), (700) un deuxième réglage de paramètres de configuration en provenance dudit appareil serveur (22), (800), ledit deuxième réglage de paramètres de configuration étant converti à partir d'un premier réglage de paramètres de configuration pour être compatible avec un deuxième appareil à commande électrique dudit au moins un appareil à commande électrique ; et
- transmettre (3-19, 3-20), (47) par ledit appareil utilisateur (20), (700) ledit deuxième réglage de paramètres de configuration audit deuxième appareil à commande électrique.

2. Procédé selon la revendication 1, **caractérisé en ce que** ledit procédé comprend en outre, après la transmission (3-5, 3-6) (42) desdits réglages de paramètres de configuration dudit premier appareil à commande électrique audit appareil serveur (22), (800), les étapes suivantes :
- télécharger (3-11, 3-11), (43) par ledit appareil utilisateur (20), (700) un outil de mise à jour de conversion, ledit outil de mise à jour de conversion étant adapté pour demander et recevoir une entrée d'au moins une mise à jour de conversion de la part d'un utilisateur ; et
- transmettre, par ledit appareil utilisateur (20), (700) ladite au moins une entrée de mise à jour de conversion audit deuxième appareil à commande électrique.

3. Procédé comprenant les étapes suivantes :
- recevoir, dans un appareil serveur (22), (800) depuis un appareil utilisateur (20), (700) ledit appareil utilisateur (20), (700) ayant une connexion avec un au moins un appareil à commande électrique dans un site local, un réglage de paramètres de configuration d'un premier appareil à commande électrique dudit au moins un appareil à commande électrique ;
**caractérisé en ce que** ledit procédé comprend en outre les étapes suivantes :
- convertir, par ledit appareil serveur (22), (800) un deuxième réglage de paramètres de configuration à partir d'un premier réglage de paramètres de configuration, ledit deuxième réglage de paramètres de configuration étant converti pour être compatible avec un deuxième appareil à commande électrique dudit au moins un appareil à commande électrique ; et
- transmettre, par ledit appareil serveur (22), (800) ledit deuxième réglage de paramètres de configuration audit appareil utilisateur (20), (700).

4. Procédé selon la revendication 3, **caractérisé en ce que** ledit procédé comprend en outre, après réception desdits réglages de paramètres de configuration dudit premier appareil à commande électrique, les étapes suivantes :
- transmettre, par ledit appareil serveur (22), (800) un outil de mise à jour de conversion audit appareil utilisateur (20), (700) ledit outil de mise à jour de conversion étant adapté pour demander et recevoir une entrée d'au moins une mise à jour de conversion de la part d'un utilisateur ; et
- recevoir, par ledit appareil serveur (22), (800) ladite au moins une entrée de mise à jour de conversion vers ledit premier appareil à commande électrique.

5. Produit programme informatique comprenant un support de stockage non transitoire lisible par ordinateur sur lequel sont stockées des instructions de programme informatique, le produit programme informatique étant **caractérisé en ce que**, lorsque lesdites instructions de programme informatique sont exécutées par au moins un processeur, elles amènent l'au moins un processeur à :
- télécharger (3-3, 3-4), (41), lorsqu'une application d'outil de configuration est démarrée (3-1) dans un appareil utilisateur (20) (700) comprenant le processeur et ayant une connexion avec au moins un appareil à commande électrique dans un site local, à partir d'un premier appareil à commande électrique dudit au moins un appareil à commande électrique, un premier réglage de paramètres de configuration dudit premier appareil à commande électrique ;
- provoquer la transmission (3-5, 3-6), (42) par ledit appareil utilisateur (20), (700) dudit réglage de paramètres de configuration dudit premier appareil à commande électrique à un appareil serveur (22) (800) ;
- provoquer la réception (3-16, 3-17), (46) par ledit appareil utilisateur (20), (700) d'un deuxième réglage de paramètres de configuration en provenance dudit appareil serveur (22), (800), ledit deuxième réglage de paramètres de configuration étant converti à partir d'un premier réglage de paramètres de configuration pour être compatible avec un deuxième appareil à commande électrique dudit au moins un appareil à commande électrique ; et
- provoquer la transmission (3-19, 3-20), (47) par ledit appareil utilisateur (20), (700) dudit deuxième réglage de paramètres de configuration audit deuxième appareil à commande électrique.

6. Produit programme informatique selon la revendication 5, **caractérisé en ce que** ledit produit programme informatique comprend en outre un support de stockage non transitoire lisible par ordinateur sur lequel sont stockées des instructions de programme informatique qui, lorsqu'elles sont exécutées par au moins un processeur, amènent ledit processeur, après avoir transmis (3-5, 3-6) (42) lesdits réglages de paramètres de configuration dudit premier appareil à commande électrique audit appareil serveur (22), (800) à :
- télécharger (3-11, 3-11) (43) un outil de mise à jour de conversion, ledit outil de mise à jour de conversion étant adapté pour demander et recevoir au moins une entrée de mise à jour de conversion de la part d'un utilisateur ; et
- provoquer la transmission, par ledit appareil utilisateur (20), (700) de ladite au moins une entrée de mise à jour de conversion vers ledit deuxième appareil à commande électrique.

7. Produit programme informatique comprenant un support de stockage non transitoire lisible par ordinateur sur lequel sont stockées des instructions de programme informatique, **caractérisé en ce que**, lorsque lesdites instructions de programme informatique sont exécutées par au moins un processeur, elles amènent l'au moins un processeur à :
- provoquer la réception, dans un appareil serveur (22) (800) comprenant le processeur, depuis un appareil utilisateur (20), (700), ledit appareil utilisateur (20), (700) ayant une connexion avec un au moins un appareil à commande électrique dans un site local, d'un réglage de paramètres de configuration d'un premier appareil à commande électrique dudit au moins un appareil à commande électrique ;
- convertir un deuxième réglage de paramètres de configuration à partir d'un premier réglage de paramètres de configuration, ledit deuxième réglage de paramètres de configuration étant converti pour être compatible avec un deuxième appareil à commande électrique dudit au moins un appareil à commande électrique ; et
- provoquer la transmission, par ledit appareil serveur (22), (800) dudit deuxième réglage de paramètres de configuration audit appareil utilisateur (20) (700).

8. Produit programme informatique selon la revendication 7, **caractérisé en ce que** ledit produit programme informatique comprend en outre un support de stockage non transitoire lisible par ordinateur sur lequel sont stockées des instructions de programme informatique qui, lorsqu'elles sont exécutées par au moins un processeur, amènent ledit au moins un processeur, après avoir reçu lesdits réglages de paramètres de configuration dudit premier appareil à commande électrique, à :
- provoquer la transmission, par ledit appareil serveur (22), (800) d'un outil de mise à jour de conversion audit appareil utilisateur (20), (700) ledit outil de mise à jour de conversion étant adapté pour demander et recevoir au moins une entrée de mise à jour de conversion de la part d'un utilisateur ; et
- recevoir, par ledit appareil serveur (22), (800) ladite au moins une entrée de mise à jour de conversion vers ledit premier appareil à commande électrique.

9. Appareil utilisateur (20), (700) comprenant au moins un processeur et au moins une mémoire comprenant un code de programme informatique, **caractérisé en ce que** ladite au moins une mémoire et le code de programme informatique sont configurés, avec l'au moins un processeur, pour faire en sorte que l'appareil utilisateur (20), (700) au moins :
- démarre (3-1), dans l'appareil utilisateur (20), (700) une application d'outil de configuration, ledit appareil utilisateur (20), (700) ayant une connexion avec un au moins un appareil à commande électrique dans un site local ;
- télécharge (3-3, 3-4) (41), par l'appareil utilisateur (20), (700) à partir d'un premier appareil à commande électrique dudit au moins un appareil à commande électrique, un premier réglage de paramètres de configuration dudit premier appareil à commande électrique ;
- transmette (3-5, 3-6), (42), par l'appareil utilisateur (20), (700) ledit réglage de paramètres de configuration dudit premier appareil à commande électrique à un appareil serveur (22), (800) ;
- reçoive (3-16, 3-17), (46) par l'appareil utilisateur (20), (700) un deuxième réglage de paramètres de configuration dudit appareil serveur (22), (800) ledit deuxième réglage de paramètres de configuration étant converti à partir d'un premier réglage de paramètres de configuration pour être compatible avec un deuxième appareil à commande électrique dudit au moins un appareil à commande électrique ; et
- transmette (3-19, 3-20), (47), par l'appareil utilisateur (20), (700) ledit deuxième réglage de paramètres de configuration audit deuxième appareil à commande électrique.

10. Appareil utilisateur (20) (700) selon la revendication 9, **caractérisé en ce que** ladite au moins une mémoire et le code de programme informatique sont configurés, avec l'au moins un processeur, en outre après avoir transmis (3-5, 3-6) (42) lesdits réglages de paramètres de configuration dudit premier appareil à commande électrique audit appareil serveur (22), (800) pour faire en sorte que l'appareil utilisateur (20) (700) au moins :
- organise une connexion avec une personne en charge de l'assistance pour aider à la conversion dudit premier réglage de paramètres de configuration en ledit deuxième réglage de paramètres de configuration.

11. Appareil utilisateur (20), (700) selon la revendication 9, **caractérisé en ce que** ladite au moins une mémoire et le code de programme informatique sont configurés, avec l'au moins un processeur, en outre après avoir transmis (3-5, 3-6) (42) lesdits réglages de paramètres de configuration dudit premier appareil à commande électrique audit appareil serveur (22), (800) pour faire en sorte que l'appareil utilisateur (20) (700) au moins :
- télécharge (3-11, 3-11), (43) par ledit appareil utilisateur (20), (700) un outil de mise à jour de conversion, ledit outil de mise à jour de conversion étant adapté pour demander et recevoir au moins une entrée de mise à jour de conversion de la part d'un utilisateur ; et
- transmette, par ledit appareil utilisateur (20), (700) ladite au moins une entrée de mise à jour de conversion audit deuxième appareil à commande électrique.

12. Appareil serveur (22), (800) l'appareil serveur (22) (800) comprenant au moins un processeur, et au moins une mémoire comprenant un code de programme informatique, **caractérisé en ce que** ladite au moins une mémoire et le code de programme informatique sont configurés, avec l'au moins un processeur, pour faire en sorte que l'appareil serveur (22) (800) au moins :
- reçoive dans l'appareil serveur (22), (800) depuis un appareil utilisateur (20), (700) ledit appareil utilisateur (20), (700) ayant une connexion avec un au moins un appareil à commande électrique dans un site local, un réglage de paramètres de configuration d'un premier appareil à commande électrique dudit au moins un appareil à commande électrique ;
- convertisse par l'appareil serveur (22), (800) un deuxième réglage de paramètres de configuration à partir d'un premier réglage de paramètres de configuration, ledit deuxième réglage de paramètres de configuration étant converti pour être compatible avec un deuxième appareil à commande électrique dudit au moins un appareil à commande électrique ; et
- transmette par l'appareil serveur (22), (800) ledit deuxième réglage de paramètres de configuration audit appareil utilisateur (20), (700).

13. Système, **caractérisé en ce que** ledit système comprend au moins :
- un ou plusieurs sites, un site comprenant au moins un appareil à commande électrique qui comprend une ou plusieurs interfaces sans fil pour permettre des connexions locales ;
- au moins un appareil serveur selon la revendication 12 ; et
- un ou plusieurs appareils utilisateur selon la revendication 9.

14. Système selon la revendication 13, **caractérisé en ce que** l'au moins un appareil serveur (22) (800) est en outre configuré pour organiser une connexion avec une personne en charge de l'assistance pour aider à la conversion dudit premier réglage de paramètres de configuration en ledit deuxième réglage de paramètres de configuration.

15. Système selon la revendication 13, **caractérisé en ce que** :
- l'au moins un appareil serveur (22) (800) est en outre configuré pour transmettre un outil de mise à jour de conversion audit appareil utilisateur (20) (700), ledit outil de mise à jour de conversion étant adapté pour demander et recevoir au moins une entrée de mise à jour de conversion de la part d'un utilisateur et pour recevoir ladite au moins une entrée de mise à jour de conversion vers ledit premier appareil à commande électrique ; et
- l'appareil utilisateur (20) (700) est en outre configuré pour télécharger (3-11, 3-11), (43) un outil de mise à jour de conversion, ledit outil de mise à jour de conversion étant adapté pour demander et recevoir au moins une entrée de mise à jour de conversion de la part d'un utilisateur ; et pour transmettre ladite au moins une entrée de mise à jour de conversion audit deuxième appareil à commande électrique.
